# EUROPÄISCHE PATENTANMELDUNG

(11) **EP 1 288 637 A2**
(43) Veröffentlichungstag der Anmeldung: **05.03.2003**
(21) Anmeldenummer: 02014289.9
(22) Anmeldetag: 27.06.2002
(51) Int. Cl.: G01G 5/00, G01G 5/04

(54) **Einrichtung zur Inhaltsermittlung von Behältern**

(30) Priorität: 01.09.2001 DE 10143020
(71) Anmelder: MESSER GRIESHEIM GmbH, 65933 Frankfurt am Main (DE)
(72) Erfinder: Tocha, Klaus, 40764 Langenfeld (DE)

(57) **Zusammenfassung**

Die Erfindung betrifft eine Einrichtung zur Inhaltsermittlung von Behältern, mit einem als Kolben-Zylindereinheit ausgebildeten und mit einem Druckmessgerät verbundenen hydraulischen Kraftaufnehmer.
Die erfindungsgemäße Einrichtung mit einem hydraulischen Kraftaufnehmer, der eine druckübertragende Flüssigkeit 2 enthaltend und ein Distanzstück 3 aufweisend, aus einer Grundplatte (4), die mittels eines lateral beweglichen Dichtungsbalges (5) mit einer Druckplatte (4) verbunden ist, besteht, gewährleistet eine kostengünstige und sichere Inhaltsermittlung von Behältern mit hoher Messgenauigkeit.

## Beschreibung

Die Erfindung betrifft eine Einrichtung zur Inhaltsermittlung von Behältern, mit den Merkmalen des Oberbegriffs von Anspruch 1.

Bei der bisherigen Inhaltsermittlung von Behältern, wie z. B. Speicherbehältern, Silos oder Tanks, werden die aus dem Behälter-gewicht resultierenden Druckkräfte mittels eines hydraulischen oder elektronischen Kraftaufnehmers auf Messgeräte übertragen und durch diese das Behältergewicht angezeigt.

In derartigen Einrichtungen zur Inhaltsermittlung von Behältern finden beispielsweise hydraulische Kraftaufnehmer vom Typ NG 10- 250 der Firma INDUSTRIE MESSTECHNIK GMBH, D-60439 Frankfurt/Main, Verwendung.

Diese hydraulischen Kraftaufnehmer bestehen im wesentlichen aus ein eine druckübertragende Flüssigkeit (z.B. Öl oder Wasser) enthaltenes zylindrisches Gehäuse mit einem in dem Gehäuse vertikal beweglich angeordneten Kolben.

Zur Inhaltsermittlung eines Behälters wird die auf den Kolben des Kraftaufnehmers einwirkende Kraft in Abhängigkeit von der jeweiligen Kolbenfläche als Druck auf die Füllflüssigkeit und durch diese auf ein an den hydraulischen Kraftaufnehmer angeschlossenes, mechanisches oder elektronisches Druckmessgerät übertragen und das Behälter-gewicht angezeigt.

Der Nachteil einer, einen derartigen hydraulischen Kraftaufnehmer aufweisenden Einrichtung besteht im wesentlichen darin, dass die Zylinder-Kolben-Einheit des Kraftaufnehmers Umwelteinflüssen, wie beispielsweise Feuchtigkeit und Schmutz, aber auch aus wärmebedingten Materialdehnungen der Behälterkonstruktion resultierenden Querkräften, ausgesetzt ist.

Diese Umwelteinwirkungen können zu einem Verkanten des Kolbens und damit zu einer unerwünschten Kolbenreibung, zur Funktions-untüchtigkeit der Abdichtungselemente und damit zum Verlust von Füllflüssigkeit führen.

Ein Austreten von Flüssigkeit aus dem Gehäuse des hydraulischen Kraftaufnehmers hat zwangsläufig zur Folge, dass kein einwandfreier Kolbenhub im Gehäuse mehr möglich ist und der Kolben sogar festklemmen kann, wodurch ein Ausfall des Kraftaufnehmers und somit der Messeinrichtung unvermeidlich ist.

Der Erfindung liegt somit die Aufgabenstellung zugrunde, eine Einrichtung der eingangs beschriebenen Art zur Verfügung zu stellen, die eine kostengünstige und sichere Inhaltsermittlung von Behältern mit hoher Genauigkeit ermöglicht.

Die Aufgabe wird erfindungsgemäß mit einer Einrichtung gemäß den Merkmalen von Anspruch 1 gelöst.

Weitere Ausgestaltung des Erfindungsgegenstandes sind den Unteransprüchen zu entnehmen.

Der in der erfindungsgemäßen Einrichtung zur Inhaltsermittlung von Behältern, wie Speicherbehältern, Silos oder Tanks, bereits erfolgreich erprobte, aus einer hermetisch dichten und lateral beweglichen Grundplatten-Dichtungsbalg-Druckplatten-Anordnung bestehende hydraulische Kraftaufnehmer weist eine hohe Festigkeit gegen Innendruck und damit eine lange Lebensdauer auf.

Durch ein innerhalb des Dichtungsbalges in der Grundplatte verschraubtes und zu der Druckplatte mit einem Freiraum angeordnetes Distanzstück wird ein vollständiges Zusammendrücken des Dichtungsbalges und damit dessen Zerstörung verhindert.

Zudem wird durch die Distanzstück-Anordnung in dem hydraulischen Kraftaufnehmer die Standsicherheit des zu wägenden Behälters auch bei Flüssigkeitsverlust (z.B. Montagefehler) gewährleistet.

Zum Befüllen bzw. Entleeren des Kraftaufnehmers mit bzw. von der druckübertragenden Flüssigkeit (z.B. Öl oder Wasser) ist die Grundplatte des Kraftaufnehmers mit Bohrungen versehen.

Die zum Befüllen mit der druckübertragenden Flüssigkeit in den Innenraum des Kraftaufnehmers in der Grundplatte vorhandene Bohrung ist mit einer O-Ring versehenen Verschraubung ausgerüstet.

Zur Weiterleitung des Flüssigkeitsdruckes weist die in der Grundplatte des Kraftaufnehmers vorhandene Bohrung ein dichtendes Anschlussteil für eine Verbindungsleitung zum Druckmessgerät auf.

Die Grund- und Druckplatte, das Distanzstück sowie der Dichtungsbalg des hydraulischen Kraftaufnehmers bestehen aus rostbeständigem Edelstahl.

Der metallische Dichtungsbalg kann durch einen, an der Grund- und Druckplatte befestigten, vorzugsweise aus Gummi bestehenden Schutzbalg vor schädlichen Umwelteinflüssen, wie beispielsweise Feuchtigkeit und Verunreinigungen, geschützt werden.

Als Kraftaufnehmerteile finden kostengünstige Handelsprodukte Verwendung.

Die laterale Beweglichkeit des Kraftaufnehmers verhindert ein Auftreten von das Messergebnis verfälschenden, beispielsweise aus Materialwärmedehnungen der Behälterkonstruktion resultierenden Querkräften.

Damit wird eine sichere und exakte Ermittlung des Behältergewichts gewährleistet.

Ein weiterer wesentlicher Vorteil des Einsatzes der erfindungs- gemäßen Einrichtung zur Inhaltsermittlung von Behältern mit dem eine hohe Festigkeit gegen Innendruck aufweisenden Kraftaufnehmer besteht darin, dass die bisher erforderlichen Ausgleichselemente, wie beispielsweise Rollen, Gleitschuhe u. ä., entfallen können.

Bei Bedarf kann die erfindungsgemäße Einrichtung um ein parallel zu dem mechanischen Anzeigegerät zur Messdaten-Fernübertragung/auswertung/-anzeige geschaltetes, elektronisches Druckmessgerät erweitert werden.

Die Anzeigelektronik kann in einem/einer von Umwelteinflüssen und mechanischen Krafteinwirkungen freien Behälterbereich/-umgebung installiert werden.

Nachfolgend wird die Erfindung anhand eines in der Zeichnung dargestellten Ausführungsbeispiels näher erläutert.

Es zeigen:
- Fig. 1:: eine Schnittdarstellung eines in der erfindungsgemäßen Einrichtung eingesetzten hydraulischen Kraftaufnehmers;
- Fig. 2:: eine schematische Darstellung der erfindungsgemäßen Einrichtung mit einem zur Inhaltsermittlung auf dem Kraftaufnehmer angeordneten Behälter.

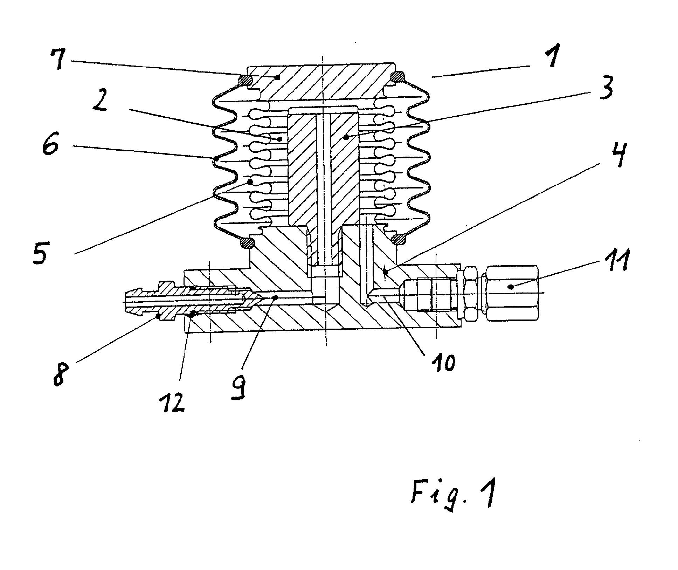

Die Fig. 1 zeigt einen Kraftaufnehmer 1 , der mit einer druckübertragenden Flüssigkeit 2 und ein Distanzstück 3 versehen ist, wobei dessen Grundplatte 4 mittels eines Dichtungsbalges 5 mit einer oberen Druckplatte 7 lateral beweglich verbunden ist.
Zum Schutz des Dichtungsbalges 5 vor schädlichen Umwelteinflüssen, wie z.B. Feuchtigkeit und Verunreinigungen, ist dieser mit einem an der Grund- und Druckplatte 4, 7 befestigten Schutzbalg 6 aus Gummi umhüllt. Der metallische Dichtungsbalg 5 ist mit der Grund- und Druckplatte 4, 7 zu einem die druckübertragende Flüssigkeit 2 und das Distanzstück 3 enthaltenen, lateral beweglichen Kraftaufnehmer 1 verschweißt.
Das zur Vermeidung des vollständigen Zusammendrückens und damit einer Beschädigung oder Zerstörung des Kraftaufnehmers 1 verhindernde und zudem die Standsicherheit eines zu wägenden Behälters gewährleistende Distanzstück 3 ist in dem von dem Dichtungsbalg 5 umschlossenen Innenraum in der Grundplatte 4 verschraubt und mit einem Freiraum zu der Druckplatte 7 angeordnet.
Zum Befüllen des Kraftaufnehmers 1 mit der druckübertragenden Flüssigkeit 2 weist die in der Grundplatte 4 vorhandene Bohrung 9 eine mit einer O-Ring-Dichtung 12 ausgebildete Verschraubung 8 auf.
Zum Entleeren der druckbeaufschlagten Flüssigkeit 2 aus dem Kraftaufnehmer 1 ist eine in der Grundplatte 4 enthaltene Bohrung 10 mit einem dichtenden Anschlussteil 11 ausgerüstet.
Die Grund- und Druckplatte 4, 7, das Distanzstück 3 und der lateral bewegliche, metallische Dichtungsbalg 5 bestehen aus rostbeständigem Edelstahl, der Schutzbalg 6 aus Gummi.
Als Metallbalgteile kommen kostengünstige Handelsprodukte zum Einsatz.

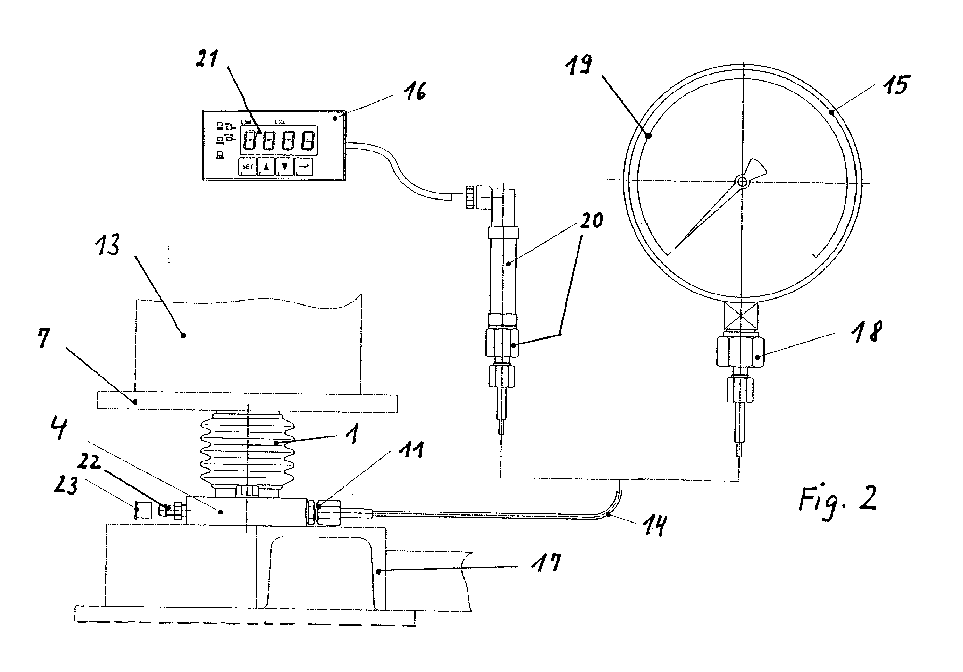

Die in Fig. 2 dargestellte erfindungsgemäße Einrichtung zur Inhaltsermittlung eines Behälters 13 weist einen hydraulischen Kraftaufnehmer 1 auf, der durch eine Leitung 14 mit einem mechanischen Anzeigegerät in Form eines Manometers 15 und wahlweise mit einem elektronischen Druckmessgerät 16 verbunden werden kann.
Zur Inhaltsermittlung des auf der Druckplatte 7 des hydraulischen Kraftaufnehmers 1 angeordneten Behälters 13 wird die durch das Behältergewicht auf die Druckplatte 7 des mit seiner Grundplatte 4 auf einem Behälterfuß 17 angeordneten Kraftaufnehmers 1 einwirkende Kraft als Druck auf die in dem Kraftaufnehmer 1 befindliche Flüssigkeit 2 und durch die auf diese Weise druckbeaufschlagte Flüssigkeit 2 über die mittels des Anschlusses 11 mit dem Kraftaufnehmer 1 verbundene Leitung 14 auf das mittels eines Anschlusses 18 mit der Leitung 14 verbundene Druckmessgerät 15 übertragen und das Behältergewicht (KN, kg, t, m³ oder I) mittels einer skalierten Anzeige 19 des als Manometers ausgebildeten Druckmessgerätes 15 angezeigt.
Zur Daten-Fernübertragung kann die in vorbeschriebener Weise druckbeaufschlagte Flüssigkeit 2 des Kraftaufnehmers 1 durch die Leitung 14 an das mittels eines Anschlusses 20 mit der Leitung 14 verbundene elektronische Druckmessgerät 16 übertragen und das Behältergewicht (KN, kg, t, m³ oder I) mittels dessen numerischer Anzeige 21 angezeigt werden.
Zur Verhinderung des Eindringens von Feuchtigkeit, Staub und Schutz u. ä. kann ein Anschluss 22 der für die Zuführung der drucküber-tragenden Flüssigkeit 2 in das Innere des Kraftaufnehmers 1 in dessen Grundplatte 4 vorgesehenen Bohrung 9 mittels einer handelsüblichen Schutzkappe 23 verschlossen werden.

### Bezugszeichenaufstellung

- 1: Kraftaufnehmer, hydraulisch
- 2: Flüssigkeit, druckübertragend
- 3: Distanzstück
- 4: Grundplatte
- 5: Dichtungsbalg, metallisch
- 6: Schutzbalg, Gummi
- 7: Druckplatte
- 8: Verschraubung
- 9: Bohrung
- 10: Bohrung
- 11: Anschlussteil
- 12: O-Ring-Dichtung
- 13: Behälter
- 14: Leitung
- 15: Manometer
- 16: Druckmessgerät, elektronisch (Anzeigelektronik)
- 17: Behälterfuß
- 18: Anschluss
- 19: Anzeige, skaliert
- 20: Anschluss
- 21: Anzeige, numerisch
- 22: Anschluss
- 23: Schutzkappe

## Patentansprüche

1. Einrichtung zur Inhaltsermittlung von Behältern, mit einem als hydraulische Kolben-Zylinder-Einheit ausgebildeten und mit einem Messgerät verbundenen Kraftaufnehmer,
**dadurch gekennzeichnet, daß**
der Kraftaufnehmer (1) aus einer Grundplatte (4), die mittels eines Dichtungsbalges (5) mit einer Druckplatte (7) verbunden ist, besteht.

2. Einrichtung nach Anspruch 1, **dadurch gekennzeichnet, daß** der eine druckübertragende Flüssigkeit (2) enthaltene Kraftaufnehmer (1) ein innerhalb des Dichtungsbalges (5) mit der Grundplatte (4) festverbundenes und mit einem Freiraum zur Druckplatte (7) angeordnetes Distanzstück aufweist.

3. Einrichtung nach Anspruch 1 oder 2, **dadurch gekennzeichnet, daß** die Grundplatte (4) Bohrungen (9, 10) zum Befüllen und Entleeren der druckübertragenden Flüssigkeit (2) in den und aus dem Kraftaufnehmer (1) aufweist.

4. Einrichtung nach Anspruch 3, **dadurch gekennzeichnet, daß** die Bohrung (9) eine mit einer O-Ring Dichtung (12) ausgebildete Verschraubung (8) enthält.

5. Einrichtung nach Anspruch 3, **dadurch gekennzeichnet, daß** die Bohrung (10) ein dichtendes Anschlussteil (11) aufweist.

6. Einrichtung nach einem der vorhergehenden Ansprüche,
**dadurch gekennzeichnet, daß** der Kraftaufnehmer (1) einen an der Grundund Druckplatte (4, 7) befestigten, den lateral beweglichen Dichtungsbalg (5) umhüllenden und vorzugsweise aus Gummi bestehenden Schutzbalg (6) aufweist.

7. Einrichtung nach einem der vorhergehenden Ansprüche, **dadurch gekennzeichnet, daß** die Grund- und Druckplatte (4, 7), das Distanzstück (3) und der Dichtungsbalg (5) des Kraftaufnehmers (1) aus rostbeständigem Edelstahl bestehen.

8. Einrichtung nach einem der vorhergehenden Ansprüche, **dadurch gekennzeichnet, dass** diese eine, parallel zu einem hydraulischen Druckmessgerät (15) geschaltete Anzeigelektronik (16, 21) aufweist.
